# EUROPEAN PATENT APPLICATION

(11) **EP 4 265 710 A1**
(43) Date of publication of application: **25.10.2023**
(21) Application number: 21910041.9
(22) Date of filing: 16.11.2021
(51) Int. Cl.: C12G 3/04, A23L 2/00, A23L 2/52

(54) **BEVERAGE CONTAINING QUASSIN**

(30) Priority: 21.12.2020 JP 2020211601
(71) Applicant: Suntory Holdings Limited, Osaka 530-8203 (JP)
(72) Inventor: KOZU, Saki, Kawasaki-shi, Kanagawa 211-0067 (JP); YOSHIHIRO, Akira, Kawasaki-shi, Kanagawa 211-0067 (JP)
(74) Representative: Vossius & Partner Patentanwälte Rechtsanwälte mbB
(86) International application number: PCT/JP2021/041980
(87) International publication number: WO 2022/137888

(57) **Abstract**

An object is to provide a beverage with satisfactory palatability. A packaged beverage has a quassin content of 0.08 ppm or more and 25 ppm or less, a total phenol content of 4.5 ppm or more, an alcohol content of 9.5% (v/v) or less, a degree of sweetness of 3.5 or less, and a degree of sourness of 0.08 or more.

## Description

### TECHNICAL FIELD

The present invention relates to a novel beverage, a method for producing the same, and a method for improving the flavor of a beverage.

### BACKGROUND ART

There are various alcoholic beverages and alcoholic-taste beverages in the market. These beverages have been developed in various ways to differentiate them from competing products. PTL 1 discloses that a non-alcoholic beverage containing a specific amount of an aliphatic aldehyde having 5 carbon atoms, such as 2-methylbutanal, and an acetic acid ester, such as isobutyl acetate, is provided, in response to a problem of insufficient thickness of taste and poor aftertaste balance of non-alcoholic beverages. PTL 2 discloses that a sugar-free alcoholic beverage containing a citrus fruit juice has a problem of insufficient or decreased thickness of taste, body feeling, and palatability, but this problem can be solved by blending a specific amount of maltitol in a base (basic solution) used for production of the alcoholic beverage. PTL 3 discloses that a specific amount of soluble dietary fiber is incorporated into a non-alcoholic beverage as well as adjustment of the content ratio of the soluble dietary fiber and citric acid to a specific range in order to enhance the thickness of taste and ease of drinking. PTL 4 discloses that in a carbonated beverage containing an acidity imparting agent (e.g., vitamin C, acidulant), a specific amount of catechins is incorporated into a beverage having a citric acidity within a specific range in order to suppress an irritating sour taste and enhance a body feeling without increasing calories.

### CITATION LIST

### PATENT LITERATURE

PTL 1: Japanese Patent No. 6230780
PTL 2: Japanese Patent No. 5498154
PTL 3: Japanese Patent No. 6541751
PTL 4: Japanese Patent Laid-Open No. 2011-182683

### SUMMARY OF INVENTION

### TECHNICAL PROBLEM

As mentioned above, in the conventional art, a sweetening substance is added to a beverage in order to impart a thickness of taste thereto. However, it is difficult to apply this measure to beverages with reduced sweetness, as the demand for such beverages is increasing due to the growing health consciousness. In addition, beverages with reduced sweetness may be watery and do not provide a lasting sense of satisfaction. An object of the present invention is to provide a beverage that is less sweet, yet has satisfactory palatability.

### SOLUTION TO PROBLEM

In view of the above situation, the inventors of the present application have paid attention to components that constitute the flavor of alcoholic drinks. As a result of their diligent study, the inventors have found, among the wide variety of ingredients present in alcoholic drinks, ingredients that serve as indicators of satisfactory palatability of the beverages and confirmed that beverages with satisfactory palatability can be obtained by appropriately blending such ingredients. On the basis of such findings, the present invention has been completed.

The present invention provides, but is not limited to, the following:
(1) A packaged beverage, having
   a quassin content of 0.08 ppm or more and 25 ppm or less,
   a total phenol content of 4.5 ppm or more,
   an alcohol content of 9.5% (v/v) or less,
   a degree of sweetness of 3.5 or less, and
   a degree of sourness of 0.08 or more;
(2) The packaged beverage according to (1), having a quassin content of 0.1 ppm or more;
(3) The packaged beverage according to (1) or (2), having a quassin content of 20 ppm or less;
(4) The packaged beverage according to any one of (1) to (3), having a degree of sweetness of 3.0 or less;
(5) The packaged beverage according to any one of (1) to (4), having a degree of sourness of 0.1 or more;
(6) The packaged beverage according to any one of (1) to (5), having a total phenol content of 7 ppm or more;
(7) The packaged beverage according to any one of (1) to (6), having an alcohol content of 3.0% (v/v) or less;
(8) The packaged beverage according to any one of (1) to (7), which is a non-alcoholic beverage;
(9) A method for producing a packaged beverage, comprising the steps of:
   adjusting a quassin content of the beverage to 0.08 ppm or more and 25 ppm or less,
   adjusting a total phenol content of the beverage to 4.5 ppm or more,
   adjusting an alcohol content of the beverage to 9.5% (v/v) or less,
   adjusting a degree of sweetness of the beverage to 3.5 or less, and
   adjusting a degree of sourness of the beverage to 0.08 or more; and
(10) A method for improving satisfactory palatability of a packaged beverage, comprising the steps of:
   adjusting a quassin content of the beverage to 0.08 ppm or more and 25 ppm or less,
   adjusting a total phenol content of the beverage to 4.5 ppm or more,
   adjusting an alcohol content of the beverage to 9.5% (v/v) or less,
   adjusting a degree of sweetness of the beverage to 3.5 or less, and
   adjusting a degree of sourness of the beverage to 0.08 or more.

### DESCRIPTION OF EMBODIMENTS

The present invention provides a packaged beverage. The container is not limited in any form and can be provided in the form of, for example, a plastic-based container, a metal can, a laminated paper container layered with metal foil or plastic film, and a glass bottle. The beverage may be either an alcoholic beverage or a non-alcoholic beverage. The beverage may be either a carbonated beverage or a non-carbonated beverage.

The upper limit of the alcohol content of the alcoholic beverage is preferably 9.5% (v/v) or less, more preferably 9.0% (v/v) or less, still more preferably 7.0% (v/v) or less, even more preferably 5.0% (v/v) or less, and most preferably 3.0% (v/v) or less. Examples of the alcoholic beverages include at least one selected from the group consisting of distilled liquor (e.g., whiskey, brandy, vodka, gin, rum, tequila, *shochu* (Japanese distilled spirit), *awamori* (Okinawa's distilled spirit)), brewed liquor (e.g., beer, whiskey, cider, white wine, red wine, Japanese sake, *seishu* (sake)), mixed liquor (e.g., plum liquor, liqueur, sherry, vermouth), low-malt beer, and new genres (for low-malt beer and new genres, follow the definition on the National Tax Agency website (https://www.nta.go.jp/taxes/sake/senmonjoho/kaisei/aramashi2017/index.pdf)) or beverages containing the same.

The non-alcoholic beverage is a beverage that contains no or substantially no alcohol, and more specifically, a beverage having an alcohol content of less than 0.05% (v/v) to 0.00% (v/v). Examples of the non-alcoholic beverages include, but are not limited to, beverages (alcohol-taste beverages) having at least one alcohol-like flavor (flavor that is reminiscent of the alcoholic drink or intended to approximate the flavor of the alcoholic drink) selected from the group consisting of distilled liquor (e.g., whiskey, brandy, vodka, gin, rum, tequila, *shochu* (Japanese distilled spirit), *awamori* (Okinawa's distilled spirit)), brewed liquor (e.g., beer, whiskey, cider, white wine, red wine, Japanese sake, *seishu* (sake)), mixed liquor (e.g., plum liquor, liqueur, sherry, vermouth), low-malt beer, and new genres (for low-malt beer and new genres, follow the definition on the above National Tax Agency website). The beverage of the present invention can be applied to, but not limited to, a beverage that claims low alcohol, a beverage that claims no alcohol, a beverage that claims zero alcohol, a beverage that claims alcohol free, or a beverage that claims alcohol taste.

When the beverage of the present invention contains alcohol, the alcohol in the beverage can be derived at least in part from a source alcoholic drink. For example, 20% (v/v) or more, 50% (v/v) or more, 95% (v/v) or more, or 100% (v/v) (all) of alcohol in the beverage can be derived from the source alcoholic drink. As used herein, the term "alcohol" simply means "ethanol", and "alcohol" and "ethanol" are interchangeable. With respect to alcohol, content, volume, and percentage are regarded as synonymous. Alcohol can be measured by a method known to those skilled in the art. For example, the measurement can be done with a vibrating densitometer. Specifically, the beverage is filtered or sonicated to remove carbon dioxide from the beverage. This sample is subjected to distillation under direct fire to obtain a distillate. The resulting distillate is measured for density at 15°C, and the measured density is converted to the percentage of alcohol by using Table 2 which is titled "Conversion Between Alcohol Content and Density (15°C) or Specific Gravity (15/15°C)" and annexed to Analysis Methods Prescribed by the National Tax Agency (National Tax Agency Directive No. 6 in 2007, revised Jun. 22, 2007).

The beverage of the present invention contains quassin and total phenol. Although quassin and total phenol may be present in certain alcoholic drinks, but their relationship with the flavor of alcoholic drinks was unknown. The inventors of the present application have revealed that the quassin and the total phenol can be used as indicator components for the flavor of alcoholic drinks. Thus, these components have significance for the beverage of the present invention as indicator components for satisfactory palatability.

The lower limit of the quassin content in the beverage of the present invention is preferably 0.08 ppm or more, more preferably 0.09 ppm or more, and still more preferably 0.1 ppm or more. The upper limit thereof is preferably 25 ppm or less, more preferably 23 ppm or less, and still more preferably 20 ppm or less. The quassin in the beverage can be derived at least in part from a source alcoholic drink. For example, 20% (w/w) or more, 50% (w/w) or more, 95% (w/w) or more, or 100% (w/w) (all) of the quassin in the beverage can be derived from the source alcoholic drink. The identification or quantification of quassin can be performed by any method and measured, for example, by LC-MS (liquid chromatography-mass spectrometry). Quassin is a substance represented by the molecular formula C22H28O6, and is called *kuwashin* or *kuashin* in Japanese. Quassin is known as one of bitter components found in Jamaica quassia (*Quassia excelsa* SW.) extracts. Jamaica quassia extracts, also called as quassia extracts or quassia, are obtained by extracting the branch or bark of *Quassia excelsa* SW. in the family *Simaroubaceae* with water.

The beverage of the present invention preferably has a total phenol content of 4.5 ppm or more, more preferably 5 ppm or more, still more preferably 6 ppm or more, and even more preferably 7 ppm or more. If necessary, the upper limit of the total phenol may be preferably 1,000 ppm or less, more preferably 950 ppm or less, and still more preferably 900 ppm or less. The total phenol in the beverage can be derived at least in part from a source alcoholic drink. For example, 20% (w/w) or more, 50% (w/w) or more, 95% (w/w) or more, or 100% (w/w) (all) of total phenol in the beverage can be derived from the source alcoholic drink.

As used herein, the total phenol refers to a compound having a hydroxy group on the benzene nucleus, which can be detected using a phenol reagent. For example, the detection of total phenol can be performed as follows: A sample is mixed with a phenol reagent (containing molybdic acid and tungstic acid), and a phenolic hydroxy group of the compound in the sample is bonded to molybdic acid and tungstic acid to cause a color reaction. This coloration is measured, and the amount of total phenol is derived based on the calibration curve. For the specific method, refer to Examples.

The beverage of the present invention can further have a specific degree of sweetness. The degree of sweetness can be used as an additional indicator component of satisfactory palatability for the beverage of the present invention. The beverage preferably has a degree of sweetness of 3.5 or less, more preferably 3.3 or less, and still more preferably 3.0 or less. The degree of sweetness as referred to herein means the intensity of sweetness derived from a sweetener added to a carbonated beverage. In the present specification, the degree of sweetness is calculated based on the sweetness of sucrose. For example, the degree of sweetness 1 corresponds to the intensity of sweetness of a 1% (w/v) aqueous sucrose solution, and the degree of sweetness 2 corresponds to the intensity of sweetness of a 2% (w/v) aqueous sucrose solution. Examples of the degree of sweetness of each sweetener in this specification are described below. Assuming the sucrose has a degree of sweetness of 100, acesulfame potassium, sucralose, and high fructose corn syrup are considered to have a degree of sweetness of 20,000, 60,000, and 75.5, respectively. To adjust the degree of sweetness, the amount of sweetener added should be adjusted. The degree of sweetness can be adjusted using any sweetener. For instance, a natural sweetener, sugar alcohol, and artificial sweetener can be used as a sweetener. Examples of the natural sweetener include, but are not limited to, glucose, fructose, mogrol glycoside, glycyrrhizinic acid glycoside, maltose, sucrose, lactose, rare sugar, high fructose syrup, high fructose corn syrup, oligosaccharides, honey, squeezed sugarcane juice (black molasses), sugar (e.g., white sugar, soft brown sugar, brown sugar, refined sugar), maple syrup, molasses, and starch syrup. Examples of the sugar alcohol include, but are not limited to, erythritol, xylitol, sorbitol, maltitol, and mannitol. Examples of the artificial sweetener include, but are not limited to, sucralose, acesulfame potassium, aspartame, saccharin, alitame, and neotame.

The beverage of the present invention can further have a specific degree of sourness. The degree of sourness can be used as an additional indicator component of satisfactory palatability for the beverage of the present invention. The beverage preferably has a degree of sourness of 0.08 or more, more preferably 0.09 or more, and still more preferably 0.1 or more. The degree of sourness may be adjusted using any acid. For example, the degree of sourness of a carbonated beverage can be adjusted using, but not limited to, citric acid, phosphoric acid, tartaric acid, malic acid, oxalic acid, gluconic acid, ascorbic acid, succinic acid, lactic acid, acetic acid, sulfuric acid, hydrochloric acid, fumaric acid, phytic acid, itaconic acid, or another acid. In the present invention, the degree of sourness can also be adjusted using a fruit juice (which may be either a clear fruit juice or turbid fruit juice), an acidulant of food additive standard, or the like. The degree of sourness as used herein is a value that serves as an indicator of acid content and can be calculated from the amount of alkali (e.g., sodium hydroxide) required to neutralize (pH 7.0) a certain amount of beverage (sample). An automatic titrator (e.g., Mettler Toledo DL50) can be used to measure the degree of the sourness. As used herein, the value of the degree of sourness is a value converted into the amount of citric acid (calculated from the amount of neutralization on the assumption that the acid contained in the beverage is all citric acid).

The beverage of the present invention may further contain components other than those mentioned above. Examples of such components include, but are not limited to, flavors, vitamins, pigments, antioxidants, acidulants, emulsifiers, preservatives, seasonings, and pH adjusters. However, it should be understood that these components can be present in the beverage as long as the beverage has satisfactory palatability.

The beverage of the present invention may contain ingredients derived from alcoholic drinks. Examples of the alcoholic drinks as referred to herein include, but are not limited to, distilled liquor (e.g., whiskey, brandy, vodka, gin, rum, tequila, *shochu* (Japanese distilled spirit), *awamori* (Okinawa's distilled spirit)), brewed liquor (e.g., beer, whiskey, cider, white wine, red wine, Japanese sake, *seishu* (sake)), mixed liquor (e.g., plum liquor, liqueur, sherry, vermouth), low-malt beer, and new genres (for low-malt beer and new genres, follow the definition on the above National Tax Agency website. The ingredient may be an alcoholic drink itself or a residual liquid obtained by distilling an alcoholic drink under reduced pressure. For example, an alcoholic drink can be distilled to thereby obtain a residual liquid, and the residual liquid can be incorporated into the beverage of the present invention. Distillation conditions (e.g., pressure, temperature, time) can be appropriately set by those skilled in the art. In other words, the distillation conditions can be set in consideration of the alcoholic drink to be distilled, the amount charged thereof, the capacity of the distillation equipment, the production schedule, and the like. Those skilled in the art also understand that the conditions for distillation can be set based on knowledge obtained from preliminary tests or past production results. Distillation of the alcoholic drink may be performed so that the specific component in the residual liquid has the desired content. This can be achieved, for example, by monitoring changes in the content of indicator components in the residual liquid during distillation. During distillation, for example, changes in the alcohol content in the residual liquid can be monitored, and the alcohol content in the residual liquid after distillation can be adjusted so that when the beverage is prepared by blending the residual liquid, the alcohol content in the beverage is the above content.

The present invention provides a method for producing a beverage. The production method includes the step of adjusting quassin content, total phenol content, alcohol content, degree of sweetness, and degree of sourness of the beverage to specific ranges. The "specific range" used here is as described above with respect to each component or property. Then, the production method may further include the step of blending ingredients derived from alcoholic drinks and/or other components (e.g., flavors, vitamins, pigments, antioxidants, acidulants, emulsifiers, preservatives, seasonings, pH adjusters), if necessary. The production method can further include the step of filling a container with the beverage. The ingredients derived from alcoholic drinks, other components, and containers that can be used are as illustrated above.

The beverage of the present invention has satisfactory palatability. The term "satisfactory palatability" means that the overall flavor perceived when drinking the beverage is excellent. The satisfactory level of palatability of a beverage can be determined by comprehensively evaluating refreshing flavor, robustness, and sharpness of aftertaste. In this specification, a beverage is determined to have satisfactory palatability when the refreshing flavor, robustness, and sharpness of aftertaste are each evaluated above a certain level while the sum of the evaluations of these three items is above a certain level. The satisfactory level of palatability of a beverage and, when drinking the beverage, the refreshing flavor, robustness, and sharpness of aftertaste can be evaluated sensuously. The details of the sensory evaluation are provided in Examples described below.

The present invention further provides a method for improving at least one selected from the group consisting of refreshing flavor, robustness, sharpness of aftertaste, and satisfactory palatability. The method includes the step of adjusting quassin content, total phenol content, alcohol content, degree of sweetness, and degree of sourness of the beverage to specific ranges. The "specific range" used here is as described above with respect to each component or property. Then, the step may further include blending ingredients derived from alcoholic drinks and/or other components (e.g., flavors, vitamins, pigments, antioxidants, acidulants, emulsifiers, preservatives, seasonings, pH adjusters), if necessary. The method can further include the step of filling a container with the beverage. The ingredients derived from alcoholic drinks, other components, and containers that can be used are as described above.

The present invention will be described in more detail with reference to the following Examples, which are provided for the purpose of understanding the present invention and are not intended to limit the scope of the present invention.

### EXAMPLES

### [Example 1]

To study the effect of alcohol content of a beverage on flavor, samples were prepared in which the alcohol content was varied. Samples (Table 1) with fixed quassin content, total phenol content, degree of sourness (in terms of citric acid), and degree of sweetness (in terms of sucrose) in the sample were prepared as follows in which the alcohol content was varied. The alcohol content was calculated from the amount of ethanol derived from ingredients to determine the blended amount.

Example 1-1: lemon flavor (alcohol free (0.00% (v/v)), lemon juice, acidulant (citric acid (anhydrous)), and acesulfame potassium were dissolved in carbonated water to prepare a sample (alcohol content: 0.00% (v/v)).

Example 1-2: Brewer's alcohol (alcohol content: 95% (v/v)) as a source of alcohol, lemon flavor, lemon juice, acidulant, and acesulfame potassium were dissolved in carbonated water to prepare a sample (alcohol content: 3.00% (v/v)).

Example 1-3: Brewer's alcohol (alcohol content: 95% (v/v)) as a source of alcohol, lemon flavor, lemon juice, acidulant, and acesulfame potassium were dissolved in carbonated water to prepare a sample (alcohol content: 7.00% (v/v)).

Example 1-4: Brewer's alcohol (alcohol content: 95% (v/v)) as a source of alcohol, lemon flavor, lemon juice, acidulant, and acesulfame potassium were dissolved in carbonated water to prepare a sample (alcohol content: 9.00% (v/v)).

Comparative Example 1-1: Brewer's alcohol (alcohol content: 95% (v/v)) as a source of alcohol, lemon flavor, lemon juice, acidulant, and acesulfame potassium were dissolved in carbonated water to prepare a sample (alcohol content: 10.00% (v/v)).

Each of the samples was subjected to sensory evaluation by four trained expert panelists. The panelists each drank the samples and evaluated refreshing flavor, robustness, and sharpness of aftertaste upon drinking on a five-grade scale.
- 5 points: sensed strong
- 4 points: sensed slightly strong
- 3 points: sensed
- 2 points: sensed slightly weak
- 1 point: sensed weak

An average score was calculated from the scores of the respective panelists, and the average score was used as the individual evaluation for refreshing flavor, robustness, and sharpness of aftertaste.

The beverages were then evaluated as satisfactory palatability when the two criteria given below were satisfied.
- For each sample, the individual evaluation for refreshing flavor, robustness, and sharpness of aftertaste was all 2 or more on average score.
- For each sample, the sum of the average scores for refreshing flavor, robustness, and sharpness of aftertaste was 9 or more.

**[Table 1]**

| | Example 1-1 | Example 1-2 | Example 1-3 | Example 1-4 | Comparative Example 1-1 |
|---|---|---|---|---|---|
| Alcohol (%(v/v)) | 0.0 | 3.0 | 7.0 | 9.0 | 10.0 |
| Quassin (ppm) | 0.2 | 0.2 | 0.2 | 0.2 | 0.2 |
| Total phenol (ppm) | 70 | 70 | 70 | 70 | 70 |
| Degree of sourness (in terms of citric acid g/100 ml) | 0.2 | 0.2 | 0.2 | 0.2 | 0.2 |
| Degree of sweetness (in terms of sucrose (w/v%)) | 1 | 1 | 1 | 1 | 1 |
| Carbon dioxide gas pressure (VOL) | 1.8 | 1.8 | 1.8 | 1.8 | 1.8 |
| Refreshing flavor | 5 | 5 | 5 | α | 2 |
| Robustness | 5 | 5 | 5 | 5 | 5 |
| Sharpness of aftertaste | 5 | 5 | 4 | 3 | 1 |
| Total score (average score) for refreshing flavor, robustness, and sharpness of aftertaste | 15 | 15 | 14 | 12 | 8 |
| Satisfactory palatability | Yes | Yes | Yes | Yes | No |

In Comparative Example 1-1 with an alcohol content of 10% (v/v), the individual evaluations for refreshing flavor and robustness were 2 points and 5 points, respectively, while the individual evaluation for sharpness of aftertaste was below 2 points. The total score of the three evaluation items (refreshing flavor, robustness, and sharpness of aftertaste) was below 9 points.

It was shown that a beverage having an alcohol content of less than 10% (v/v) would improve refreshing flavor, robustness, and sharpness of aftertaste, thus resulting in a beverage with satisfactory palatability. In addition, the lower the alcohol content was, the higher the individual evaluation of refreshing flavor and sharpness of aftertaste as well as satisfactory palatability were tended to be.

### [Example 2]

To study the effect of quassin content of a beverage on flavor, samples were prepared in which the quassin content was varied. Samples (Table 2) with fixed alcohol content, total phenol content, degree of sourness (in terms of citric acid), and degree of sweetness (in terms of sucrose) in the sample were prepared as follows in which the quassin content was varied. The quassin content may be adjusted using a quassin extract.

Example 2-1: Lemon flavor (alcohol free (0.00% (v/v)), lemon juice, acidulant, and acesulfame potassium were dissolved in carbonated water to prepare a sample (quassin content: 0.1 ppm).

Example 2-2: Lemon flavor (alcohol free (0.00% (v/v)), lemon juice, acidulant, and acesulfame potassium were dissolved in carbonated water to prepare a sample (quassin content: 20 ppm).

Comparative Example 2-1: Lemon flavor (alcohol free (0.00% (v/v)), lemon juice, acidulant, and acesulfame potassium were dissolved in carbonated water to prepare a sample (quassin content: 30 ppm).

Each of the samples was subjected to sensory evaluation according to the method described in Example 1.

**[Table 2]**

| | Example 2-1 | Example 2-2 | Comparative Example 2-1 |
|---|---|---|---|
| Alcohol (%(v/v)) | 0 | 0 | 0 |
| Quassin (ppm) | 0.1 | 20 | 30 |
| Total phenol (ppm) | 70 | 70 | 70 |
| Degree of sourness (in terms of citric acid g/100 ml) | 0.2 | 0.2 | 0.2 |
| Degree of sweetness (in terms of sucrose (w/v%)) | 1 | 1 | 1 |
| Carbon dioxide gas pressure (VOL) | 1.8 | 1.8 | 1.8 |
| Refreshing flavor | 5 | 3 | 1 |
| Robustness | 4 | 5 | 5 |
| Sharpness of aftertaste | 4 | 3 | 1 |
| Total score (average score) for refreshing flavor, robustness, and sharpness of aftertaste | 13 | 11 | 7 |
| Satisfactory palatability | Yes | Yes | No |

In Comparative Example 2-1 with a quassin content of 30 ppm, the individual evaluation for robustness was 5 points, while the individual evaluations for refreshing flavor and sharpness of aftertaste were both below 2 points. The total score of the three evaluation items (refreshing flavor, robustness, and sharpness of aftertaste) was below 9 points.

It was shown that a beverage having a quassin content of 0.1 ppm or more and less than 30 ppm would improve refreshing flavor, robustness, and sharpness of aftertaste, thus resulting in a beverage with satisfactory palatability.

### [Example 3]

To study the effect of total phenol content of a beverage on flavor, samples were prepared in which the total phenol content was varied. Samples (Table 3) with fixed alcohol content, quassin content, degree of sourness (in terms of citric acid), and degree of sweetness (in terms of sucrose) in the sample were prepared as follows in which the total phenol content was varied. The total phenol content was adjusted by measuring the amount of total phenol in ingredients (fruit juice and base alcohol) in advance and controlling the blended amount.

Comparative Example 3-1: Brewer's alcohol (alcohol content: 95% (v/v)) as a source of alcohol, lemon flavor, lemon juice, acidulant, and acesulfame potassium were dissolved in carbonated water to prepare a sample (total phenol content: 4 ppm).

Example 3-1: Brewer's alcohol (alcohol content: 95% (v/v)) as a source of alcohol, lemon flavor, lemon juice, acidulant, and acesulfame potassium were dissolved in carbonated water to prepare a sample (total phenol content: 7 ppm).

Example 3-2: Brewer's alcohol (alcohol content: 95% (v/v)) as a source of alcohol, lemon flavor, lemon juice, acidulant, and acesulfame potassium were dissolved in carbonated water to prepare a sample (total phenol content: 200 ppm).

Example 3-3: Brewer's alcohol (alcohol content: 95% (v/v)) as a source of alcohol, lemon flavor, lemon juice, acidulant, and acesulfame potassium were dissolved in carbonated water to prepare a sample (total phenol content: 600 ppm).

Example 3-4: Brewer's alcohol (alcohol content: 95% (v/v)) as a source of alcohol, lemon flavor, lemon juice, acidulant, and acesulfame potassium were dissolved in carbonated water to prepare a sample (total phenol content: 850 ppm).

**[Table 3]**

| | Example 3-1 | Example 3-2 | Example 3-3 | Example 3-4 | Comparative Example 3-1 |
|---|---|---|---|---|---|
| Alcohol (%(v/v)) | 5.0 | 5.0 | 5.0 | 5.0 | 5.0 |
| Quassin (ppm) | 0.2 | 0.2 | 0.2 | 0.2 | 0.2 |
| Total phenol (ppm) | 7 | 200 | 600 | 850 | 4 |
| Degree of sourness (in terms of citric acid g/100 ml) | 0.2 | 0.2 | 0.2 | 0.2 | 0.2 |
| Degree of sweetness (in terms of sucrose (w/v%)) | 1 | 1 | 1 | 1 | 1 |
| Carbon dioxide gas pressure (VOL) | 1.8 | 1.8 | 1.8 | 1.8 | 1.8 |
| Refreshing flavor | 5 | 5 | 3 | 2 | 4 |
| Robustness | 3 | 4 | 5 | 4 | 1 |
| Sharpness of aftertaste | 5 | 5 | 4 | 4 | 4 |
| Total score (average score) for refreshing flavor, robustness, and sharpness of aftertaste | 13 | 14 | 12 | 10 | 9 |
| Satisfactory palatability | Yes | Yes | Yes | Yes | No |

In Comparative Example 3-1 with a total phenol content of 4 ppm, the total score of the three evaluation items exceeded 9 points, while the individual evaluation for robustness was below 2 points. Therefore, the criteria for satisfactory palatability were not satisfied.

Accordingly, it was shown that a beverage having a total phenol content of more than 4 ppm would improve refreshing flavor, robustness, and sharpness of aftertaste, thus resulting in a beverage with satisfactory palatability.

### [Example 4]

To study the effect of degree of sourness (in terms of citric acid) of a beverage on flavor, samples were prepared in which the degree of sourness was varied. Samples (Table 4) with fixed alcohol content, quassin content, total phenol content, and degree of sweetness in the sample were prepared as follows in which the degree of sourness was varied. Citric acid (anhydrous) was used to adjust the degree of sourness.

Example 4-1: Lemon flavor (alcohol free (0.00% (v/v)), lemon juice, acidulant, and acesulfame potassium were dissolved in carbonated water to prepare a sample (degree of sourness: 0.1).

Comparative Example 4-1: Lemon flavor (alcohol free (0.00% (v/v)), lemon juice, acidulant, and acesulfame potassium were dissolved in carbonated water to prepare a sample (degree of sourness: 0.07).

Comparative Example 4-2: Lemon flavor (alcohol free (0.00% (v/v)), lemon juice, acidulant, and acesulfame potassium were dissolved in carbonated water to prepare a sample (degree of sourness: 0.05).

Each of the samples was subjected to sensory evaluation according to the method described in Example 1.

**[Table 4]**

| | Example 4-1 | Comparative Example 4-1 | Comparative Example 4-2 |
|---|---|---|---|
| Alcohol (%(v/v)) | 0 | 0 | 0 |
| Quassin (ppm) | 0.2 | 0.2 | 0.2 |
| Total phenol (ppm) | 70 | 70 | 70 |
| Degree of sourness (in terms of citric acid g/100 ml) | 0.1 | 0.07 | 0.05 |
| Degree of sweetness (in terms of sucrose (w/v%)) | 1 | 1 | 1 |
| Carbon dioxide gas pressure (VOL) | 1.8 | 1.8 | 1.8 |
| Refreshing flavor | 4 | 3 | 4 |
| Robustness | 4 | 2 | 1 |
| Sharpness of aftertaste | 4 | 3 | 1 |
| Total score (average score) for refreshing flavor, robustness, and sharpness of aftertaste | 12 | 8 | 6 |
| Satisfactory palatability | Yes | No | No |

In Comparative Example 4-1 with a degree of sourness of 0.07, the total score of the three evaluation items (refreshing flavor, robustness, and sharpness of aftertaste) was below 9 points.

In Comparative Example 4-2 with a degree of sourness of 0.05, the individual evaluation for refreshing flavor was 4 points, while the individual evaluations for robustness and sharpness of aftertaste were below 2 points. The total score of the three evaluation items (refreshing flavor, robustness, and sharpness of aftertaste) was below 9 points.

In Example 4-1 with a degree of sourness of 0.1, the individual evaluations for refreshing flavor, robustness, and sharpness of aftertaste were all 4 points, and the total score of the three evaluation items (refreshing flavor, robustness, and sharpness of aftertaste) exceeded 9 points.

Accordingly, it was shown that when the degree of sourness of a beverage was set to exceed 0.07, the individual evaluations for refreshing flavor, robustness, and sharpness of aftertaste were all improved, resulting in a beverage with satisfactory palatability.

### [Example 5]

To study the effect of degree of sweetness (in terms of sucrose) of a beverage on flavor, samples were prepared in which the degree of sweetness was varied. Samples (Table 5) with fixed alcohol content, quassin content, total phenol content, and degree of sourness (in terms of citric acid) in the sample were prepared as follows in which the degree of sweetness was varied.

Example 5-1: Lemon flavor (alcohol free (0.00% (v/v)), lemon juice, acidulant, and acesulfame potassium were dissolved in carbonated water to prepare a sample (degree of sweetness: 2).

Example 5-2: Lemon flavor (alcohol free (0.00% (v/v)), lemon juice, acidulant, and acesulfame potassium were dissolved in carbonated water to prepare a sample (degree of sweetness: 3).

Comparative Example 5-1: Lemon flavor (alcohol free (0.00% (v/v)), lemon juice, acidulant, and acesulfame potassium were dissolved in carbonated water to prepare a sample (degree of sweetness: 4).

Each of the samples was subjected to sensory evaluation according to the method described in Example 1.

**[Table 5]**

| | Example 5-1 | Example 5-2 | Comparative Example 5-1 |
|---|---|---|---|
| Alcohol (%(v/v)) | 0 | 0 | 0 |
| Quassin (ppm) | 0.2 | 0.2 | 0.2 |
| Total phenol (ppm) | 70 | 70 | 70 |
| Degree of sourness (in terms of citric acid g/100 ml) | 0.2 | 0.2 | 0.2 |
| Degree of sweetness (in terms of sucrose (w/v%)) | 2.0 | 3.0 | 4.0 |
| Carbon dioxide gas pressure (VOL) | 1.8 | 1.8 | 1.8 |
| Refreshing flavor | 4 | 2 | 1 |
| Robustness | 5 | 4 | 4 |
| Sharpness of aftertaste | 4 | 4 | 1 |
| Total score (average score) for refreshing flavor, robustness, and sharpness of aftertaste | 13 | 10 | 6 |
| Satisfactory palatability | Yes | Yes | No |

In Comparative Example 5-1 with a degree of sweetness of 4.0, the individual evaluation for robustness was 4 points, while the individual evaluations for refreshing flavor and sharpness of aftertaste were below 2 points.

In Example 5-1 with a degree of sweetness of 2.0, the individual evaluations for refreshing flavor, robustness, and sharpness of aftertaste were 4 points, 5 points, and 4 points, respectively, and the total score of the three evaluation items (refreshing flavor, robustness, and sharpness of aftertaste) exceeded 9 points.

In Example 5-2 with a degree of sweetness of 3.0, the individual evaluations for refreshing flavor, robustness, and sharpness of aftertaste were 2 points, 4 points, and 4 points, respectively, and the total score of the three evaluation items (refreshing flavor, robustness, and sharpness of aftertaste) exceeded 9 points.

Accordingly, it was shown that when a beverage having a degree of sweetness of less than 4 would improve all refreshing flavor, robustness, and sharpness of aftertaste, resulting in a beverage with satisfactory palatability.

### [Example 6]

To study the effect of carbon dioxide gas pressure (VOL) of a beverage on flavor, samples were prepared in which the carbon dioxide gas pressure was varied. Samples (Table 6) with fixed alcohol content, quassin content, total phenol content, degree of sourness (in terms of citric acid), and degree of sweetness in the sample were prepared as follows in which carbon dioxide gas pressure was changed.

Example 6-1: Lemon flavor (alcohol free (0.00% (v/v)), lemon juice, acidulant, and acesulfame potassium were dissolved in water to prepare a sample (carbon dioxide gas pressure: 0 (VOL)).

Example 6-2: Lemon flavor (alcohol free (0.00% (v/v)), lemon juice, acidulant, and acesulfame potassium were dissolved in water and carbon dioxide gas was injected to prepare a sample (carbon dioxide gas pressure: 3.0 (VOL)).

Example 6-3: Lemon flavor (alcohol free (0.00% (v/v)), lemon juice, acidulant, and acesulfame potassium were dissolved in water and carbon dioxide gas was injected to prepare a sample (carbon dioxide gas pressure: 3.6 (VOL)).

Each of the samples was subjected to sensory evaluation according to the method described in Example 1.

**[Table 6]**

| | Example 6-1 | Example 6-2 | Example 6-3 |
|---|---|---|---|
| Alcohol (%(v/v)) | 0 | 0 | 0 |
| Quassin (ppm) | 0.2 | 0.2 | 0.2 |
| Total phenol (ppm) | 70 | 70 | 70 |
| Degree of sourness (in terms of citric acid g/100 ml) | 0.2 | 0.2 | 0.2 |
| Degree of sweetness (in terms of sucrose (w/v%)) | 1 | 1 | 1 |
| Carbon dioxide gas pressure (VOL) | 0 | 3.0 | 3.6 |
| Refreshing flavor | 3 | 3 | 2 |
| Robustness | 4 | 5 | 5 |
| Sharpness of aftertaste | 3 | 4 | 4 |
| Total score (average score) for refreshing flavor, robustness, and sharpness of aftertaste | 10 | 12 | 11 |
| Satisfactory palatability | Yes | Yes | Yes |

In Example 6-1 with a carbon dioxide gas pressure of 0 (VOL) (non-carbonated), the individual evaluations for refreshing flavor, robustness, and sharpness of aftertaste were 3 points, 4 points, and 3 points, respectively, and the total score of the three evaluation items (refreshing flavor, robustness, and sharpness of aftertaste) exceeded 9 points.

In Example 6-2 with a carbon dioxide gas pressure of 3.0 (VOL), the individual evaluations for refreshing flavor, robustness, and sharpness of aftertaste were 3 points, 5 points, and 4 points, respectively, and the total score of the three evaluation items (refreshing flavor, robustness, and sharpness of aftertaste) exceeded 9 points.

In Example 6-3 with a carbon dioxide gas pressure of 3.6 (VOL), the individual evaluations for refreshing flavor, robustness, and sharpness of aftertaste were 2 points, 5 points, and 4 points, respectively, and the total score of the three evaluation items (refreshing flavor, robustness, and sharpness of aftertaste) exceeded 9 points.

Accordingly, it was shown that the improvement in the refreshing flavor, robustness, and sharpness of aftertaste of the beverage was not affected by carbon dioxide gas pressure. It was also shown that the satisfactory palatability of the beverage was not affected by the carbon dioxide gas pressure.

### [Example 7]

To study the effect of a sweetener used for adjusting the degree of the sweetness of a beverage on flavor, samples containing various sweeteners were prepared. Samples (Table 7) with fixed alcohol content, quassin content, total phenol content, degree of sourness (in terms of citric acid), degree of sweetness, and carbon dioxide gas pressure in the sample were prepared as follows. Here, acesulfame potassium, sucralose, fructose syrup, and starch syrup (TETRUP(Registered Trademark) (Hayashibara Co., Ltd.)) were used to adjust the degree of sweetness.

Example 7-1: Lemon flavor (alcohol free (0.00% (v/v)), lemon juice, acidulant, and acesulfame potassium were dissolved in carbonated water to prepare a sample. Acesulfame potassium was used to adjust the degree of sweetness.

Example 7-2: Lemon flavor (alcohol free (0.00% (v/v)), lemon juice, acidulant, and sucralose were dissolved in carbonated water to prepare a sample. Sucralose was used to adjust the degree of sweetness.

Example 7-3: Lemon flavor (alcohol free (0.00% (v/v)), lemon juice, acidulant, and fructose syrup were dissolved in carbonated water to prepare a sample. Fructose syrup was used to adjust the degree of sweetness.

Example 7-4: Lemon flavor (alcohol free (0.00% (v/v)), lemon juice, acidulant, and starch syrup were dissolved in carbonated water to prepare a sample. Starch syrup was used to adjust the degree of sweetness.

Each of the samples was subjected to sensory evaluation according to the method described in Example 1.

**[Table 7]**

| | Example 7-1 | Example 7-2 | Example 7-3 | Example 7-4 |
|---|---|---|---|---|
| Alcohol (%(v/v)) | 0 | 0 | 0 | 0 |
| Quassin (ppm) | 0.2 | 0.2 | 0.2 | 0.2 |
| Total phenol (ppm) | 70 | 70 | 70 | 70 |
| Degree of sourness (in terms of citric acid g/100 ml) | 0.2 | 0.2 | 0.2 | 0.2 |
| Degree of sweetness (in terms of sucrose (w/v%)) | 1.0 | 1.0 | 1.0 | 1.0 |
| Carbon dioxide gas pressure (VOL) | 1.8 | 1.8 | 1.8 | 1.8 |
| Refreshing flavor | 5 | 3 | 4 | a |
| Robustness | 5 | 5 | 5 | 5 |
| Sharpness of aftertaste | 5 | 3 | 3 | 4 |
| Total score (average score) for refreshing flavor, robustness, and sharpness of aftertaste | 15 | 11 | 12 | 13 |
| Satisfactory palatability | Yes | Yes | Yes | Yes |

In the range tested, the individual evaluations for refreshing flavor, robustness, and sharpness of aftertaste exceeded 2 points, and the total score of the three evaluation items (refreshing flavor, robustness, and sharpness of aftertaste) also exceeded 9 points, regardless of whether the degree of sweetness was adjusted using any of the sweeteners.

Accordingly, it was shown that the improvement in the refreshing flavor, robustness, and sharpness of aftertaste of the beverage was not affected by the type of sweetener to be used. It was also shown that the satisfactory palatability of the beverage was not affected by the type of sweetener to be used.

### [Example 8]

To study the effect of a source of alcohol used in a beverage on flavor, samples containing various sources of alcohol were prepared. Samples (Table 8) with fixed alcohol content, quassin content, total phenol content, degree of sourness (in terms of citric acid), degree of sweetness, and carbon dioxide gas pressure in the sample were prepared as follows. At that time, various sources of alcohol were used.

Example 8-1: Beer (The Malt's(Registered Trademark) (Suntory Beer Limited)) as a source of alcohol, lemon flavor, lemon juice, acidulant, and acesulfame potassium were dissolved in carbonated water to prepare a sample.

Example 8-2: New genre beer (Kinmugi(Registered Trademark), Suntory Holdings Limited) as a source of alcohol, lemon flavor, lemon juice, acidulant, and acesulfame potassium were dissolved in carbonated water to prepare a sample.

Example 8-3: Cider as a source of alcohol, lemon flavor, lemon juice, acidulant, and acesulfame potassium were dissolved in carbonated water to prepare a sample.

Example 8-4: Whiskey as a source of alcohol, lemon flavor, lemon juice, acidulant, and acesulfame potassium were dissolved in carbonated water to prepare a sample.

Example 8-5: Vodka as a source of alcohol, lemon flavor, lemon juice, acidulant, and acesulfame potassium were dissolved in carbonated water to prepare a sample.

Example 8-6: Brandy as a source of alcohol, lemon flavor, lemon juice, acidulant, and acesulfame potassium were dissolved in carbonated water to prepare a sample.

Example 8-7: Gin as a source of alcohol, lemon flavor, lemon juice, acidulant, and acesulfame potassium were dissolved in carbonated water to prepare a sample.

Example 8-8: Tequila as a source of alcohol, lemon flavor, lemon juice, acidulant, and acesulfame potassium were dissolved in carbonated water to prepare a sample.

Example 8-9: Rum as a source of alcohol, lemon flavor, lemon juice, acidulant, and acesulfame potassium were dissolved in carbonated water to prepare a sample.

Example 8-10: *Seishu* (sake) as a source of alcohol, lemon flavor, lemon juice, acidulant, and acesulfame potassium were dissolved in carbonated water to prepare a sample.

Example 8-11: *Shochu* (Japanese distilled spirit) as a source of alcohol, lemon flavor, lemon juice, acidulant, and acesulfame potassium were dissolved in carbonated water to prepare a sample.

Example 8-12: White wine as a source of alcohol, lemon flavor, lemon juice, acidulant, and acesulfame potassium were dissolved in carbonated water to prepare a sample.

**[Table 8]**

| | Example 8-1 | Example 8-2 | Example 8-3 | Example 8-4 | Example 8-5 | Example 8-6 | Example 8-7 | Example 8-8 | Example 8-9 | Example 8-10 | Example 8-11 | Example 8-12 |
|---|---|---|---|---|---|---|---|---|---|---|---|---|
| Alcohol (%(v/v)) | 5 | 5 | 5 | 5 | 5 | 5 | 5 | 5 | 5 | 5 | 5 | 5 |
| Quassin (ppm) | 0.2 | 0.2 | 0.2 | 0.2 | 0.2 | 0.2 | 0.2 | 0.2 | 0.2 | 0.2 | 0.2 | 0.2 |
| Total phenol (ppm) | 370 | 200 | 70 | 20 | 20 | 20 | 20 | 20 | 20 | 20 | 20 | 80 |
| Degree of sourness (in terms of citric acid g/100 ml) | 0.15 | 0.15 | 0.15 | 0.15 | 0.15 | 0.15 | 0.15 | 0.15 | 0.15 | 0.15 | 0.15 | 0.15 |
| Degree of sweetness (in terms of sucrose (w/v%)) | 1 | 1 | 1 | 1 | 1 | 1 | 1 | 1 | 1 | 1 | 1 | 1 |
| Carbon dioxide gas pressure (VOL) | 1.8 | 1.8 | 1.8 | 1.8 | 1.8 | 1.8 | 1.8 | 1.8 | 1.8 | 1.8 | 1.8 | 1.8 |
| Refreshing flavor | 3 | 4 | 4 | 5 | 5 | 5 | 3 | 3 | 3 | 3 | 5 | 3 |
| Robustness | 5 | 4 | 4 | 4 | 5 | 4 | a | 4 | 4 | 4 | 5 | 5 |
| Sharpness of aftertaste | 4 | 4 | 4 | 4 | 5 | 4 | 4 | 3 | 3 | 3 | 5 | 3 |
| Total score (average score) for refreshing flavor, robustness, and sharpness of aftertaste | 12 | 12 | 12 | 13 | 15 | 13 | 11 | 10 | 10 | 10 | 15 | 11 |
| Satisfactory palatability | Yes | Yes | Yes | Yes | Yes | Yes | Yes | Yes | Yes | Yes | Yes | Yes |

In the range tested, the individual evaluations for refreshing flavor, robustness, and sharpness of aftertaste exceeded 2 points, and the total score of the three evaluation items (refreshing flavor, robustness, and sharpness of aftertaste) also exceeded 9 points, regardless of whether the percentage of alcohol was adjusted using any of the sources of alcohol. In addition, the beverage had satisfactory palatability.

Accordingly, it was shown that the improvement in the refreshing flavor, robustness, and sharpness of aftertaste of the beverage was not affected by the type of source of alcohol to be used. It was also shown that the satisfactory palatability of the beverage was not affected by the type of source of alcohol to be used.

### [Analysis Method]

In the present Examples, when it was necessary to analyze the components of each sample, the analysis was performed by methods described below.

### (1) Degree of sourness

Using an automatic titrator (Mettler Toledo DL50), the samples are neutralized (pH 7.0) by addition of aqueous sodium hydroxide solution. The degree of sourness is calculated from the amount of sodium hydroxide required for neutralization. The degree of sourness is a value converted into the amount of citric acid (calculated from the amount of neutralization on the assumption that the acid contained in the beverage is all citric acid).

### (2) Degree of sweetness

The degree of sweetness is a degree of sweetness calculated based on the sweetness of sucrose and corresponds to a sucrose concentration (w/v%) in an aqueous sucrose solution. Since the degree of sweetness varies depending on the sweetening substance used, the degree of sweetness is calculated using numerical values of the respective degrees of sweetness when the degree of sweetness of sucrose is taken as 1.

### (3) Alcohol content (regarded as synonymous with percentage of alcohol)

The sample is filtered or sonicated to remove carbon dioxide from the beverage. Thereafter, the sample is distilled under direct fire, and the resulting distillate is measured for density at 15°C. The measured density was converted to an alcohol content by using Table 2 which is titled "Conversion Between Alcohol Content and Density (15°C) or Specific Gravity (15/15°C)" and annexed to Analysis Methods Prescribed by the National Tax Agency (National Tax Agency Directive No. 6 in 2007, revised Jun. 22, 2007).

### (4) Total phenol

### Instrument used

A. Spectrophotometer (UV-2450, manufactured by Shimadzu Corporation) and 10 mm glass cell
B. Thermostatic water tank capable of maintaining temperature at 30 ± 0.1°C

### Reagent

A. Phenol reagent (FUJIFILM Wako Pure Chemical Corporation, [for clinical use] (#277-08891 or #279-08895) diluted 2-fold with distilled water to be used
B. 10% anhydrous sodium carbonate solution (prepared by dissolving 100 g of anhydrous sodium carbonate (special grade reagent) in 1 L of water)
C. Gallic acid monohydrate (CAS. No: 5995-86-8), grade 1 or higher, to be used

### Measurement Method

A. Take 8.3 ml of water in a test tube, add 0.2 ml of a sample, followed by stirring to make the mixture uniform.
B. Add 0.5 ml of phenol reagent.
C. Add 1 ml of 10% anhydrous sodium carbonate solution within 5 minutes.
D. Immediately stir to make the mixture uniform and then react at 30°C for 30 minutes.
E. After completion of the reaction, transfer the reaction solution to a cell and measure the absorbance at 760 nm with a spectrophotometer.
F. Perform quantification using a calibration curve determined in advance.

### Method of Forming Calibration Curve

A. Take exactly 110.5 mg of gallic acid monohydrate and dissolve in water to make a 100 ml solution (1,000 mg/L solution as gallic acid).
B. Take exactly 0, 10, 30 and 50 ml of each of the diluted solutions using a volumetric pipette, further dilute with water to obtain 100 ml as standard samples (0 mg/L, 100 mg/L, 300 mg/L, and 500 mg/L solutions, respectively).
C. Measure the standard samples according to the above measurement method and then the absorbance at each level.
D. Plot the absorbance on the vertical axis and the concentration of gallic acid (mg/L) on the horizontal axis to form a calibration curve.

## Claims

1. A packaged beverage, having
a quassin content of 0.08 ppm or more and 25 ppm or less,
a total phenol content of 4.5 ppm or more,
an alcohol content of 9.5% (v/v) or less,
a degree of sweetness of 3.5 or less, and
a degree of sourness of 0.08 or more.

2. The packaged beverage according to claim 1, having a quassin content of 0.1 ppm or more.

3. The packaged beverage according to claim 1 or 2, having a quassin content of 20 ppm or less.

4. The packaged beverage according to any one of claims 1 to 3, having a degree of sweetness of 3.0 or less.

5. The packaged beverage according to any one of claims 1 to 4, having a degree of sourness of 0.1 or more.

6. The packaged beverage according to any one of claims 1 to 5, having a total phenol content of 7 ppm or more.

7. The packaged beverage according to any one of claims 1 to 6, having an alcohol content of 3.0% (v/v) or less.

8. The packaged beverage according to any one of claims 1 to 7, which is a non-alcoholic beverage.

9. A method for producing a packaged beverage, comprising the steps of:
adjusting a quassin content of the beverage to 0.08 ppm or more and 25 ppm or less,
adjusting a total phenol content of the beverage to 4.5 ppm or more,
adjusting an alcohol content of the beverage to 9.5% (v/v) or less,
adjusting a degree of sweetness of the beverage to 3.5 or less, and
adjusting a degree of sourness of the beverage to 0.08 or more.

10. A method for improving satisfactory palatability of a packaged beverage, comprising the steps of:
adjusting a quassin content of the beverage to 0.08 ppm or more and 25 ppm or less,
adjusting a total phenol content of the beverage to 4.5 ppm or more,
adjusting an alcohol content of the beverage to 9.5% (v/v) or less,
adjusting a degree of sweetness of the beverage to 3.5 or less, and
adjusting a degree of sourness of the beverage to 0.08 or more.
